# EUROPEAN PATENT SPECIFICATION

(11) **EP 4 187 272 B1**
(45) Date of publication and mention of the grant of the patent: **09.09.2026**
(21) Application number: 21855351.9
(22) Date of filing: 27.07.2021
(51) Int. Cl.: G01S 7/02, G01S 13/931

(54) **DETECTION APPARATUS, MANUFACTURING METHOD FOR DETECTION APPARATUS, AND TERMINAL COMPRISING DETECTION APPARATUS**
DETEKTIONSVORRICHTUNG, HERSTELLUNGSVERFAHREN FÜR DETEKTIONSVORRICHTUNG UND ENDGERÄT MIT DER DETEKTIONSVORRICHTUNG
APPAREIL DE DÉTECTION, PROCÉDÉ DE FABRICATION D'UN APPAREIL DE DÉTECTION, ET TERMINAL COMPRENANT UN APPAREIL DE DÉTECTION

(30) Priority: 11.08.2020 CN 202010800271
(43) Date of publication of application: 31.05.2023
(60) Divisional application: 26184018.5
(73) Proprietor: Yinwang Intelligent Technologies Co., Ltd., Shenzhen, Guangdong 518110 (CN)
(72) Inventor: ZHANG, Zhiwei, Shenzhen, Guangdong 518129 (CN)
(74) Representative: Pfenning, Meinig & Partner mbB
(86) International application number: PCT/CN2021/108651
(87) International publication number: WO 2022/033298

(56) References cited:
- CN-A- 101 038 338
- CN-A- 104 569 986
- CN-A- 106 043 144
- CN-A- 111 257 837
- CN-U- 209 624 765
- DE-A1- 102013 100 554
- US-A1- 2004 227 663
- US-A1- 2007 115 102
- US-A1- 2014 070 982
- US-A1- 2016 023 624
- US-A1- 2016 370 456

## Description

### TECHNICAL FIELD

This application relates to the automated driving field, and in particular, to a detection apparatus, a method for manufacturing a detection apparatus and a terminal.

### BACKGROUND

With continuous improvement of automobile safety standards, a market of advanced driver assistance systems (advanced driver assistance systems, ADAS) has come into being, and a vehicle-mounted millimeter-wave radar is a standard and main sensor of a vehicle-mounted sensor system. Existing vehicle-mounted millimeter-wave radars are supplied to vehicle manufacturing enterprises in a form of independent vehicle-mounted accessories. Limited by a series of vehicle engineering constraints such as a vehicle appearance design and vehicle space, millimeter-wave propagation characteristic constraints, and the like, installation of a vehicle-mounted millimeter-wave radar on a vehicle is greatly constrained, and some installation scenarios even affect millimeter-wave radar performance.

DE 10 2013 100554 A1 discloses a radar device suitable for installation in a corner area of a motor vehicle. Circuit boards interconnected via flexible electrical cables are arranged in a housing of the radar device. The circuit boards have transmitting antennas and receiving antennas. The circuit boards and the outer sides of the housing 8 follow the outer contour of the vehicle.

US 2014/070982 A1 discloses a vehicle obstacle detection device. In the vehicle obstacle detection device, a shield plate may be formed as a radio wave absorbing body.

US 2004/227663 A1 discloses a millimeter-wave radar. In the millimeter-wave radar, layers with a larger dielectric loss than that of a radome of the radar or magnetic loss layers are installed on a part of the side surfaces of the radome in the form of radio wave absorbing layers.

US 2016/370456 A1 discloses a radar bracket. In the radar bracket, the radar absorbing material is arranged on the backside of the side wall.

US 2016/023624A1 discloses an arrangement for a motor vehicle having a trim component, in particular a bumper, and a radar sensor. In order to detect target objects, the radar sensor is designed to emit electromagnetic waves through the trim component and to receive radiation echoes from the target objects.

### SUMMARY

The invention is set out in the appended set of claims. This application provides a detection apparatus, to improve radar performance, and also fit a shape and a structure of a vehicle skin, thereby reducing impact on a shape of a vehicle.

According to a first aspect, a detection apparatus is provided, including: a skin structure, and at least one housing designed integrally with the skin structure. The skin and each of the at least one housing form a first cavity corresponding to each housing, and the first cavity includes at least one of a first antenna board, a first digital apparatus, or a first shielding apparatus. Further, each housing is in a one-to-one correspondence with each first cavity.

The skin-integrated detection apparatus provided in this application can eliminate an installation process of a vehicle-mounted millimeter-wave radar module and auxiliary mechanical parts in an existing vehicle equipment production line and reduce management of installed accessories, and in addition, integrates a radome of a radar and a vehicle skin into one in terms of design, which is equivalent to eliminating a radome of a conventional vehicle-mounted millimeter-wave radar, thereby obtaining better millimeter-wave propagation performance.

In addition, the detection apparatus can be in a form of a split-type detection apparatus to fit a shape and a structure of the vehicle skin, thereby reducing impact on an appearance of the vehicle.

With reference to the first aspect, in some implementations of the first aspect, the first antenna board is an independent antenna board; or the first antenna board includes at least two independent antenna boards, and an included angle having a first degree can be formed between two interconnected antenna boards in the at least two independent antenna boards.

The detection apparatus uses a separated antenna design that can fit the shape and the structure of the vehicle skin, thereby reducing the impact on the appearance of the vehicle.

With reference to the first aspect, in some implementations of the first aspect, an independent antenna board in the first antenna board is a planar antenna board or a non-planar antenna board, and a non-planar surface includes a regular curved surface, an irregular curved surface, or a folded surface having a specific angle.

A second cavity is formed between the first antenna board and the skin structure.

An opening, of the second cavity, on a side of the first antenna board is smaller than an opening, of the second cavity, on a side of the skin structure.

The foregoing cavity structure design is to make an inner surface of the cavity exhibit an inclined structure, and this structure is used to ensure that the antenna board has no structural interference within a designed field of view.

With reference to the first aspect, in some implementations of the first aspect, an inner surface of the second cavity is of a planar design or a non-planar design.

With reference to the first aspect, in some implementations of the first aspect, an inner surface of the second cavity is covered with a wave-absorbing material, or the second cavity is made of a wave-absorbing material.

With reference to the first aspect, in some implementations of the first aspect, the first cavity includes a first antenna board, a first digital apparatus, and a first shielding apparatus. At least one apparatus among the first antenna board, the first digital apparatus, or the first shielding apparatus is fastened onto the skin structure, and an apparatus other than the at least one apparatus among the first antenna board, the first digital apparatus, and the first shielding apparatus that is fastened onto the skin structure is fastened onto the housing; or the first antenna board, the first digital apparatus, and the first shielding apparatus are fastened onto the housing; or the first antenna board, the first digital apparatus, and the first shielding apparatus are fastened onto the skin structure.

With reference to the first aspect, in some implementations of the first aspect, the skin structure is a planar structure or a non-planar structure.

According to a second aspect, a method for manufacturing a detection apparatus is provided. The manufacturing method includes: providing at least one housing, and integrally designing a skin structure with the at least one housing. The skin and each of the at least one housing form a first cavity corresponding to each housing, and the first cavity includes at least one of a first antenna board, a first digital apparatus, or a first shielding apparatus. Further, each housing is in a one-to-one correspondence with each first cavity.

With reference to the second aspect, in some implementations of the second aspect, the first antenna board is an independent antenna board; or the first antenna board includes at least two independent antenna boards, and an included angle having a first degree can be formed between two interconnected antenna boards in the at least two independent antenna boards.

With reference to the second aspect, in some implementations of the second aspect, an independent antenna board in the first antenna board is a planar antenna board or a non-planar antenna board, and a non-planar surface includes a regular curved surface, an irregular curved surface, or a folded surface having a specific angle.

A second cavity is formed between the first antenna board and the skin structure.

An opening, of the second cavity, on a side of the first antenna board is smaller than an opening, of the second cavity, on a side of the skin structure.

With reference to the second aspect, in some implementations of the second aspect, an inner surface of the second cavity is of a planar design or a non-planar design.

With reference to the second aspect, in some implementations of the second aspect, an inner surface of the second cavity is covered with a wave-absorbing material, or the second cavity is made of a wave-absorbing material.

With reference to the second aspect, in some implementations of the second aspect, the first cavity includes a first antenna board, a first digital apparatus, and a first shielding apparatus. At least one apparatus among the first antenna board, the first digital apparatus, and the first shielding apparatus is fastened onto the skin structure, and an apparatus other than the at least one apparatus among the first antenna board, the first digital apparatus, and the first shielding apparatus that is fastened onto the skin structure is fastened onto the housing; or the first antenna board, the first digital apparatus, and the first shielding apparatus are fastened onto the housing; or the first antenna board, the first digital apparatus, and the first shielding apparatus are fastened onto the skin structure.

With reference to the second aspect, in some implementations of the second aspect, the skin structure is a planar structure or a non-planar structure.

For a technical effect of the second aspect or any one of the possible implementations of the second aspect, refer to description of the first aspect or any one of the possible implementations of the first aspect. Details are not described herein again.

According to a third aspect, a vehicle is provided, such as an intelligent vehicle, including the apparatus according to the first aspect or any aspect of the first aspect.

### BRIEF DESCRIPTION OF DRAWINGS

FIG. 1 is a schematic diagram of a possible application scenario applicable to an embodiment of this application;
FIG. 2 is a diagram of a typical appearance structure of a vehicle-mounted millimeter-wave radar;
FIG. 3 is a schematic diagram of a typical structural composition of a vehicle-mounted millimeter-wave radar module;
FIG. 4 is a schematic diagram of installation of a vehicle-mounted millimeter-wave radar on a vehicle;
FIG. 5 is a schematic diagram of installation of a vehicle-mounted millimeter-wave radar on a vehicle frame;
FIG. 6 is a schematic diagram of installation of a vehicle-mounted millimeter-wave radar on a skin;
FIG. 7 is a schematic diagram of a detection apparatus according to an embodiment of this application;
FIG. 8 is a schematic diagram of a structure of another detection apparatus according to an embodiment of this application;
FIG. 9 is a schematic diagram of a structure of a second cavity formed between an antenna board and a skin structure according to this application;
FIG. 10 is a schematic diagram of a structure of a second cavity formed between an antenna board and a skin in a detection apparatus having a separated antenna board according to an embodiment of this application; and
FIG. 11 is a schematic diagram of a structure of still another detection apparatus according to an embodiment of this application.

### DESCRIPTION OF EMBODIMENTS

The following describes technical solutions of this application with reference to the accompanying drawings.

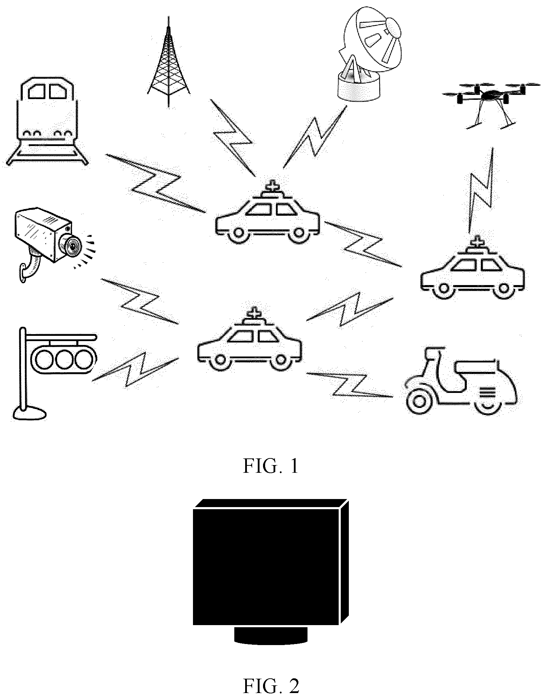

FIG. 1 is a schematic diagram of a possible application scenario applicable to an embodiment of this application. A system in this application scenario includes one or more radar apparatuses and a target apparatus that interacts with the radar apparatuses.

A radar (Radar) is an electronic device that uses an electromagnetic wave to detect a target, or is referred to as a radar apparatus, or a detector or detection apparatus. A working principle of the radar is as follows: The radar emits an electromagnetic wave (also referred to as an emission signal or a detection signal) through an emitter to irradiate a target and receive an echo signal reflected from a target object, thereby obtaining information such as a distance from the target to an electromagnetic wave emission point, a range rate (radial velocity), an azimuth, and an altitude.

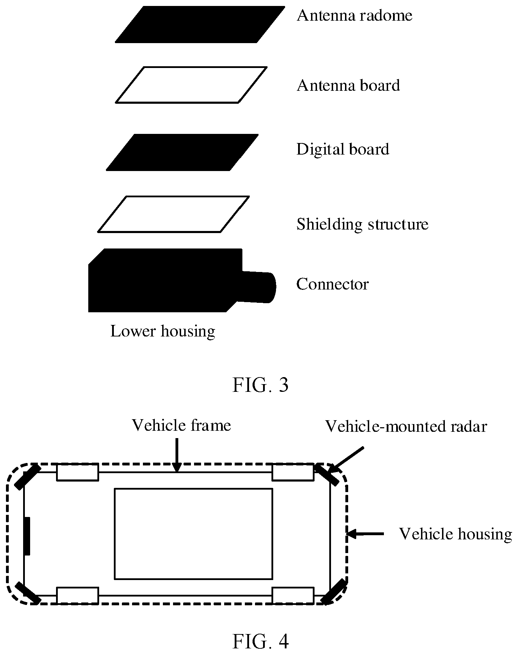

FIG. 2 is a diagram of a typical appearance structure of a vehicle-mounted millimeter-wave radar. FIG. 3 is a schematic diagram of a typical structural composition of a vehicle-mounted millimeter-wave radar. An existing vehicle-mounted millimeter-wave radar is usually an independent product, and is connected or associated with other elements in the vehicle by being installed or integrated into the vehicle, to implement a corresponding detection function for the vehicle. As shown in FIG. 3, the vehicle-mounted millimeter-wave radar includes a radome, an antenna board, a digital board, a shielding structure, a lower housing, and a connector. The foregoing mechanical parts are fixedly connected and assembled into a millimeter-wave radar through screws, riveting, bonding, or the like. The radome is made of a non-metallic material. In addition to meeting vehicle engineering requirements, such as mechanical strength, the radome needs to meet electromagnetic propagation characteristic requirements of millimeter waves of a radar.

FIG. 4 is a schematic diagram of a possible installation position of a vehicle-mounted millimeter-wave radar on a vehicle. The vehicle-mounted millimeter-wave radar is usually installed inside a housing of the vehicle, that is, inside a skin. The millimeter-wave radar is directly fixedly installed onto a vehicle frame of the vehicle or onto the vehicle skin through a screw or a buckle by using an installation assistance and conversion mechanical part or the like. This results in a need for an additional installation assistance system (component). Same as the requirements for the radome, a skin located outside the vehicle-mounted millimeter-wave radar needs to be made of a non-metallic material. This not only needs to meet vehicle engineering requirements, but also needs to meet electromagnetic wave transmission characteristic requirements.

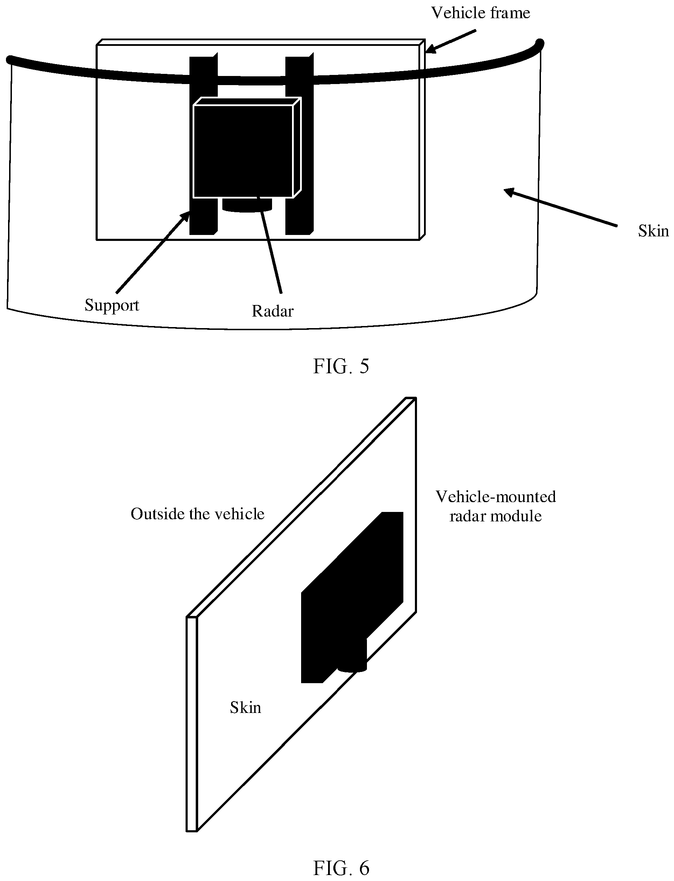

FIG. 5 is a schematic diagram of installation of a vehicle-mounted millimeter-wave radar on a vehicle frame. The vehicle-mounted millimeter-wave radar is installed on the vehicle frame through a bracket.

FIG. 6 is a schematic diagram of installation of a vehicle-mounted millimeter-wave radar on a skin. A difference from the installation in FIG. 5 is that the vehicle-mounted millimeter-wave radar is installed on the vehicle skin.

With both of vehicle-mounted radar installation manners shown in FIG. 5 and FIG. 6, the vehicle-mounted radar may not be directly observed, and because different vehicle manufacturers have different requirements for an appearance of the vehicle, to adapt to the appearance of the vehicle, performance of the radar is often not fully utilized, and this results in loss of radar performance. To ensure electromagnetic propagation characteristics of the vehicle-mounted millimeter-wave radar, ideally, it is required to impose a constraint and requirements on a shape of the skin directly in front of the vehicle-mounted millimeter-wave radar, for example, the skin is designed with a plane having a uniform non-metallic material. However, this design constraint often conflicts with an appearance design of the vehicle, or results in an unfavorable appearance design of the vehicle.

In addition, in a vehicle production line, the vehicle-mounted millimeter-wave radar requires a dedicated station for installation and debugging of the vehicle-mounted millimeter-wave radar, which increases production time; and installation assistance accessories of the vehicle-mounted millimeter-wave radar increase a quantity of accessories in the vehicle production line, and increase accessory management costs of the vehicle production line.

In view of this, this application proposes a detection apparatus, to obtain better millimeter-wave propagation performance, and also reduce management costs of installed accessories of an existing vehicle-mounted millimeter-wave radar.

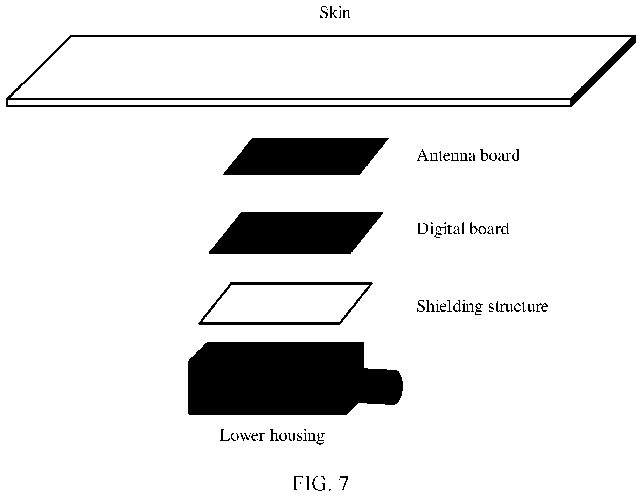

FIG. 7 is a schematic diagram of a detection apparatus according to an embodiment of this application.

The detection apparatus includes a skin (namely, an example of a skin structure), an antenna board (namely, an example of a first antenna board), a digital board (namely, an example of a first digital apparatus), a shielding structure (namely, an example of a first shielding apparatus), and a lower housing (that is, an example of a housing). The skin and the lower housing are integrally designed, and a first cavity is formed between the skin and the lower housing, and the antenna board, the digital board, and the shielding structure are all located in the first cavity. The first cavity is a closed cavity and the integrated design of the skin and the lower housing needs to meet vehicle engineering requirements, such as waterproof requirements, impact resistance requirements, and full temperature working requirements.

It should be noted that the integrated design is a connection manner different from the fixed connection (or connection or interconnection) mentioned above. For example, fixed connection between a part A and a part B means that the part A and the part B are combined through a screw, riveting, or bonding or buckling or welding, or the like, and the combination can be disassembled again on the basis of not destroying original structures of the part A and the part B; and the integrated design of the part A and the part B means that the part A and the part B make a whole, and cannot be disassembled without destroying the original structures of the part A and the part B.

For example, the "fixed connection" may be that one element may be directly or indirectly fixedly connected to another element. The fixed connection may include manners such as mechanical connection, welding, and bonding. The mechanical connection may include manners such as riveting, bolting, threaded connection, key pin connection, snap-on connection, lock connection, and plug-in connection, and the bonding may include adhesive bonding and solvent bonding.

For example, the "connection" or "interconnection" may be various connection manners such as fixed connection, rotational connection, flexible connection, mobile connection, and electrical connection; and may be direct interconnection, or may be indirect interconnection based on an intermediate medium, or an internal communication relationship between two elements or an interaction relationship between two elements.

Optionally, in the first cavity, at least one of the antenna board, the digital board, and the shielding structure is fastened to the skin, remaining components in the antenna board, the digital board, and the shielding structure are fixedly connected to the lower housing that forms the first cavity; or the antenna board, the digital board, and the shielding structure are all fixedly connected to the lower housing that forms the first cavity, or the antenna board, the digital board, and the shielding structure are all fixedly connected to the skin structure.

Optionally, the skin in this application may be of a planar structure or a non-planar structure or may be streamlined, or may be of another structure. For example, the non-planar structure may be a curved surface structure, or a structure with some protrusions and/or depressions on the basis of the planar structure or the curved surface structure.

It should be noted that, in this embodiment of this application, a shape, a local thickness, and processing requirements of the skin need to be designed and optimized according to specific situations, and are not specifically limited in this application.

Through comparison between FIG. 3 and FIG. 7, it can be learned that the detection apparatus retains an original antenna board, digital board, shielding structure, and lower housing of a conventional vehicle-mounted millimeter-wave radar, and uses a skin structure to replace a radome in the conventional millimeter-wave radar. This combines the radome and the skin structure into one, which is equivalent to eliminating the radome of the conventional vehicle-mounted millimeter-wave radar, so that better millimeter-wave propagation performance can be obtained. In addition, the integrated design of the detection apparatus is equivalent to eliminating an installation process of the conventional vehicle-mounted millimeter-wave radar modules and auxiliary mechanical parts in a vehicle equipment production line, and reducing management costs of installed accessories.

It should be noted that when the skin structure in FIG. 7 is a non-planar structure and the antenna board is a planar antenna board, there is a possibility that space behind the vehicle skin is relatively small, which may cause the planar antenna board to fail to be installed. In practice, it is required to impose a constraint and requirements on a shape of the skin directly in front of the detection apparatus, and this may affect an appearance of the vehicle. Therefore, this application proposes another detection apparatus that can reduce impact on the appearance of the vehicle.

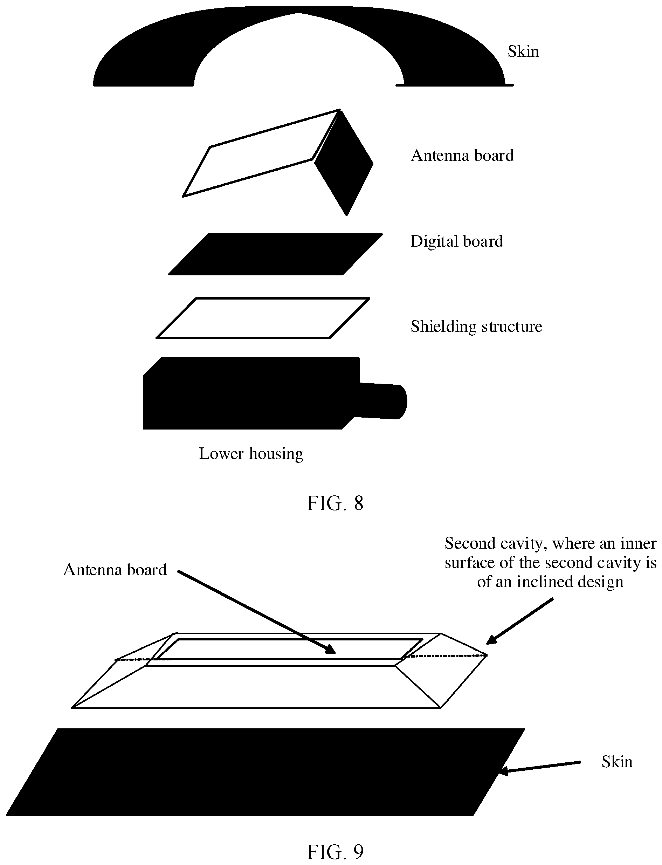

FIG. 8 is a schematic diagram of a structure of another detection apparatus according to an embodiment of this application. For ease of description, FIG. 8 is a schematic diagram only showing that the antenna board is two separate antenna boards. The difference from the integrated design of the detection apparatus in FIG. 7 is that the antenna board of the detection apparatus in FIG. 8 can be designed in a separated manner based on a shape of a skin.

Optionally, the antenna board may be an independent antenna board; or the antenna board may include at least two independent antenna boards, and an included angle having a first degree can be formed between two interconnected antenna boards in the at least two independent antenna boards.

It should be understood that the independent antenna board herein is an integrally formed antenna board.

It should be understood that the first degree may be any degree, and a specific value of the first degree needs to be determined based on an appearance of the vehicle skin in actual production, and is not limited in this application.

Optionally, any separate antenna board in the antenna boards may be a planar antenna board or a non-planar antenna board. For example, two separated antenna boards in FIG. 8 may both be planar antenna boards, or may both be non-planar antenna boards, or one of the antenna boards may be a planar antenna board and the other may be a non-planar antenna board.

Optionally, the non-planar antenna board includes an antenna board with a regular curved surface, an irregular curved surface, a folded surface having a specific angle, or the like. For example, the two separated antenna boards may be non-planar antenna boards that are completely the same, or one of the antenna boards may be an antenna board with a regular curved surface, and the other antenna board may be an antenna board with a folded surface having a specific angle.

Optionally, the two interconnected antenna boards may be interconnected through a high-speed interconnection apparatus to complete signal intercommunication. For example, the high-speed interconnection apparatus may be a flexible cable or a printed circuit board (printed circuit board, PCB). The detection apparatus in this embodiment may optimize a structure of the antenna board based on an appearance of the vehicle, and use a separated antenna board to replace an original planar antenna board behind the skin structure, thereby reducing impact of the antenna board on the appearance of the vehicle.

In addition, the separated antenna board may further implement a large-angle coverage. This makes a radiation angle of an antenna wider, and further improves quality of a signal radiated by the antenna on the basis of an integrated design.

A second cavity is formed between the antenna board and the skin structure in the detection apparatus in all embodiments of this application. An opening, of the second cavity, on a side of the antenna board is smaller than an opening, of the second cavity, on a side of the skin structure. This design enables an inner surface of the second cavity to be presented as an inclined structure, and the inclined structure is used to ensure that the antenna board has no structural interference within a designed field of view (FOV), thereby improving quality of a signal radiated and received by the antenna.

Optionally, an inner surface of the second cavity may be of a planar design or a non-planar design. For example, the inner surface of the second cavity may be of a smooth planar design structure, or the inner surface of the second cavity may be of a non-planar design structure such as a corrugated structure, a wavy structure, or a curved surface structure.

In another implementation, the inclined inner surface of the second cavity may be covered with a millimeter-wave wave-absorbing material, or the inclined inner surface may be directly made of a millimeter-wave wave-absorbing material, and the millimeter-wave wave-absorbing material may be used to improve quality of a signal radiated and received by the antenna.

Optionally, the second cavity may be a sealed cavity structure, or may be a non-sealed cavity structure, for example, the non-sealed cavity structure may be a honeycomb cavity structure.

FIG. 9 is a schematic diagram of a structure of a second cavity formed between an antenna board and a skin according to an embodiment.

Optionally, as shown in FIG. 9, both the antenna board and a skin structure are of planar structures, and the second cavity is formed between the antenna board and the skin. Optionally, an inner surface of the second cavity is of an inclined design. For a form and a structure of the second cavity, refer to the foregoing description. Details are not described herein.

Optionally, a physical distance value of a distance between the antenna board and the skin may be ensured by a mechanical part such as a limiter.

In the foregoing technical solution, through the integrated design of the detection apparatus, precision of the distance between the skin structure and the antenna board can be guaranteed, thereby improving performance of the millimeter-wave radar.

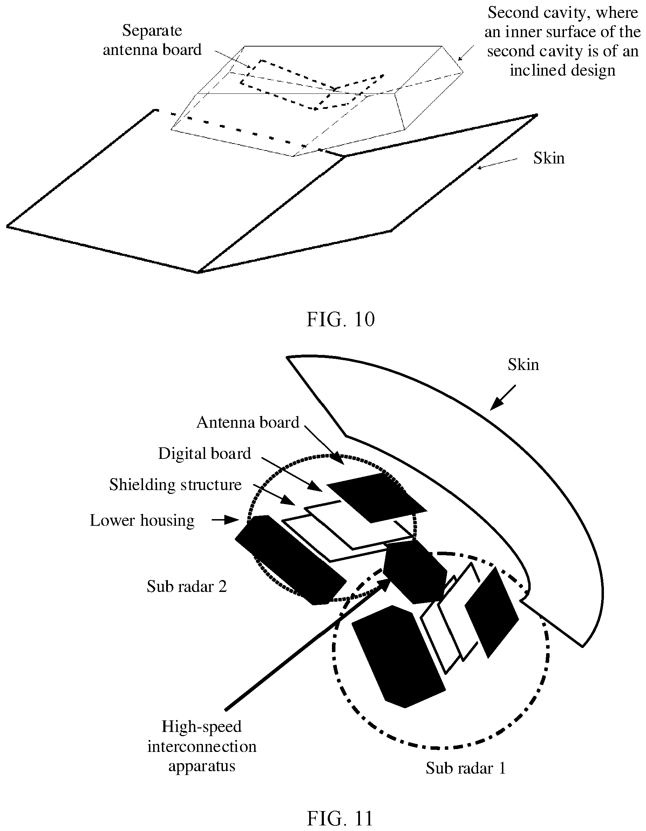

FIG. 10 is a schematic diagram of a structure of a second cavity formed between an antenna board and a skin structure in a detection apparatus having a separated antenna board according to an embodiment of this application.

Optionally, the skin structure is of a non-planar structure, and any included angle can be formed between the two separated antenna boards, and a complete skin-integrated detection apparatus is formed through an interconnection apparatus. The second cavity is formed between the separated antenna board and the skin structure. For a form and a structure of the second cavity, refer to the foregoing description. Details are not described herein.

Optionally, a physical distance value of a distance between the antenna board and the skin structure may be ensured by a mechanical part such as a limiter.

The integrated detection apparatuses in FIG. 9 and FIG. 10 can guarantee precision of the distance between the skin structure and the antenna board, thereby improving performance of the millimeter-wave radar.

It should be understood that FIG. 7 is only an example of a schematic diagram of a structure including only one lower housing, and the detection apparatus may further include a plurality of lower housings. As an example but not a limitation, FIG. 11 is a schematic diagram of a structure of a detection apparatus including two lower housings.

FIG. 11 is a schematic diagram of a structure of still another detection apparatus according to an embodiment of this application.

A difference from the detection apparatus in FIG. 7 is that the detection apparatus in this embodiment includes two lower housings. The skin structure and each of the two lower housings are integrally designed, and the skin and each of the two lower housings forms a first cavity that is in a one-to-one correspondence with each of the two lower housings. The first cavity includes an antenna board, a digital board, and a shielding apparatus. Optionally, the two lower housings are located on the same side of the skin structure and are interconnected through a high-speed interconnection apparatus that meets protection requirements such as waterproof requirements to complete signal intercommunication. For example, when there are a plurality of sub radars, the plurality of sub radars may be connected in series, in parallel, or in another manner through a high-speed interconnection apparatus. This is not specifically limited in this application.

In the following, for convenience of description, parts formed by the skin and the two lower housings are respectively referred to as a sub radar 1 and a sub radar 2.

Optionally, structures of the two sub radars in this embodiment may be the same or different. For example, that the structures of the two radars are different from each other may be expressed as follows: An antenna board in the sub radar 1 is a planar antenna board, and an inner surface of a second cavity corresponding to the antenna board in the sub radar 1 and the skin is of a planar design. An antenna board in the sub radar 2 is an antenna board with a folded surface having a specific angle, and an inner surface of a second cavity corresponding to the antenna board in the sub radar 2 and the skin is of a corrugated structure.

A structure optimization design may be performed on the detection apparatus in this embodiment based on an appearance design of the vehicle, a plurality of sub radars are combined with high-speed interconnection to form a complete skin-integrated detection apparatus. This structure and form are more suitable for a structure and a shape of the skin, and reduce impact on an appearance of the vehicle.

On the basis of any of the foregoing embodiments, an embodiment of this application provides a manufacturing method. The manufacturing method specifically includes: providing at least one housing, and integrally designing a skin structure with the at least one housing. The skin and each of the at least one housing form a first cavity corresponding to each housing, and the first cavity includes at least one of a first antenna board, a first digital apparatus, or a first shielding apparatus. Further, each housing is in a one-to-one correspondence with each first cavity.

Optionally, the first antenna board is an independent antenna board; or the first antenna board includes at least two independent antenna boards, and an included angle having a first degree can be formed between two interconnected antenna boards in the at least two independent antenna boards.

It should be understood that the first degree may be any degree, and a specific value of the first degree needs to be determined based on an appearance of the vehicle skin in actual production, and is not limited in this application.

Optionally, a separate antenna board in the first antenna board is a planar antenna board or a non-planar antenna board, and the non-planar surface includes a regular curved surface, an irregular curved surface, or a folded surface having a specific angle.

A second cavity is formed between the first antenna board and the skin structure.

An opening, of the second cavity, on a side of the first antenna board is smaller than an opening, of the second cavity, on a side of the skin structure.

Optionally, an inner surface of the second cavity is of a planar design or a non-planar design.

Optionally, an inner surface of the second cavity is covered with a wave-absorbing material, or the second cavity is made of a wave-absorbing material.

Optionally, the first cavity includes a first antenna board, a first digital apparatus, and a first shielding apparatus. Specifically, at least one apparatus among the first antenna board, the first digital apparatus, and the first shielding apparatus is fastened onto the skin structure, and an apparatus other than the at least one apparatus among the first antenna board, the first digital apparatus, and the first shielding apparatus that is fastened onto the skin structure is fastened onto the housing; or the first antenna board, the first digital apparatus, and the first shielding apparatus are fastened onto the housing; or the first antenna board, the first digital apparatus, and the first shielding apparatus are fastened onto the skin structure.

Optionally, the skin structure is a planar structure or a non-planar structure.

An embodiment of this application further provides a terminal, and the terminal is provided with the detection apparatus in the embodiment of this application.

An embodiment of this application further provides a vehicle, the vehicle is provided with the detection apparatus in the embodiment of this application. When the detection apparatus provided in this application is applied to the vehicle, this can eliminate an installation process of a vehicle-mounted millimeter-wave radar and auxiliary mechanical parts in an existing vehicle equipment production line and reduce management of installed accessories, and integrates a radome of an existing radar apparatus and a vehicle skin into one in terms of design, which is equivalent to eliminating a radome of a conventional vehicle-mounted millimeter-wave radar, thereby obtaining better millimeter-wave propagation performance. A structure optimization design may be performed on the detection apparatus based on an appearance design of the vehicle, thereby reducing impact on an appearance of the vehicle.

Further, the detection apparatus improves an advanced driver assistance system (advanced driver assistance system, ADAS) capability of a terminal or the vehicle in automated driving or assisted driving, and can be applied to the Internet of Vehicles, such as vehicle to everything (vehicle to everything, V2X), long term evolution-vehicle (long term evolution-vehicle, LTE-V), and vehicle-to-vehicle (vehicle-to-vehicle, V2V).

It should be understood that structures of components of the detection apparatus and the connection relationship between the components that are shown in FIG. 7 to FIG. 11 are merely examples for description, and a structure of any replaceable component with the same function as each component shall fall within the protection scope of the embodiments of this application.

## Claims

1. A detection apparatus, comprising:
a skin structure; and
at least one housing designed integrally with the skin structure, wherein the skin structure and each housing of the at least one housing form a first cavity corresponding to each housing, and
the first cavity comprises at least one of a first antenna board, a first digital apparatus, or a first shielding apparatus;
wherein a second cavity is formed between the first antenna board and the skin structure, and
wherein an opening, of the second cavity, on a side of the first antenna board is smaller than an opening, of the second cavity, on a side of the skin structure.

2. The detection apparatus according to claim 1, wherein the first antenna board is an independent antenna board; or
the first antenna board comprises at least two independent antenna boards, and an included angle having a first degree can be formed between two interconnected antenna boards in the at least two independent antenna boards.

3. The detection apparatus according to claim 2, wherein an independent antenna board in the first antenna board is a planar antenna board or a non-planar antenna board, and a non-planar surface comprises a regular curved surface, an irregular curved surface, or a folded surface having a specific angle.

4. The detection apparatus according to any one of claims 1 to 3, wherein an inner surface of the second cavity is of a planar design or a non-planar design.

5. The detection apparatus according to any one of claims 1 to 4, wherein the inner surface of the second cavity is covered by a wave-absorbing material, or the second cavity is made of a wave-absorbing material.

6. The detection apparatus according to any one of claims 1 to 5, wherein the first cavity comprises a first antenna board, a first digital apparatus, and a first shielding apparatus; and
at least one apparatus among the first antenna board, the first digital apparatus, or the first shielding apparatus is fastened onto the skin structure, and an apparatus other than the at least one apparatus among the first antenna board, the first digital apparatus, and the first shielding apparatus that is fastened onto the skin structure is fastened onto the housing; or
the first antenna board, the first digital apparatus, and the first shielding apparatus are fastened onto the housing; or
the first antenna board, the first digital apparatus, and the first shielding apparatus are fastened onto the skin structure.

7. The detection apparatus according to any one of claims 1 to 6, wherein the skin structure is a planar structure or a non-planar structure.

8. A method for manufacturing a detection apparatus, comprising:
providing at least one housing, and integrally designing a skin structure with the at least one housing, wherein the skin structure and each of the at least one housing form a first cavity corresponding to each housing, and
the first cavity comprises at least one of a first antenna board, a first digital apparatus, or a first shielding apparatus,
wherein the manufacturing method further comprises: forming a second cavity between the first antenna board and the skin structure, and
wherein an opening, of the second cavity, on a side of the first antenna board is smaller than an opening, of the second cavity, on a side of the skin structure.

9. The manufacturing method according to claim 8, wherein the first antenna board is an independent antenna board or the first antenna board comprises at least two independent antenna boards, and an included angle of a first degree can be formed between two interconnected antenna boards in the at least two independent antenna boards.

10. The manufacturing method according to claim 9, wherein an independent antenna board in the first antenna board is a planar antenna board or a non-planar antenna board, and a non-planar surface comprises a regular curved surface, an irregular curved surface, or a folded surface having a specific angle.

11. The manufacturing method according to any one of claims 8 to 10, wherein an inner surface of the second cavity is of a planar design or a non-planar design.

12. The manufacturing method according to any one of claims 8 to 11, wherein the inner surface of the second cavity is covered by a wave-absorbing material, or the second cavity is made of a wave-absorbing material.

13. The manufacturing method according to any one of claims 8 to 12, wherein the first cavity comprises a first antenna board, a first digital apparatus, and a first shielding apparatus; and
at least one apparatus among the first antenna board, the first digital apparatus, or the first shielding apparatus is fastened onto the skin structure, and an apparatus other than the at least one apparatus among the first antenna board, the first digital apparatus, and the first shielding apparatus that is fastened onto the skin structure is fastened onto the housing; or
the first antenna board, the first digital apparatus, and the first shielding apparatus are fastened onto the housing; or
the first antenna board, the first digital apparatus, and the first shielding apparatus are fastened onto the skin structure.

14. A terminal, wherein the terminal comprises the detection apparatus according to any one of claims 1 to 7.

15. The terminal according to claim 14, wherein the terminal is a vehicle.

## Patentansprüche

1. Detektionsvorrichtung, umfassend:
eine Außenhautstruktur; und
mindestens ein Gehäuse, das einstückig mit der Außenhautstruktur ausgelegt ist, wobei die Außenhautstruktur und jedes Gehäuse des mindestens einen Gehäuses einen jedem Gehäuse entsprechenden ersten Hohlraum ausbilden und
der erste Hohlraum mindestens eines von einer ersten Antennenplatine, einer ersten digitalen Vorrichtung oder einer ersten Abschirmvorrichtung umfasst;
wobei ein zweiter Hohlraum zwischen der ersten Antennenplatine und der Außenhautstruktur ausgebildet ist und
wobei eine Öffnung des zweiten Hohlraums auf einer Seite der ersten Antennenplatine kleiner als eine Öffnung des zweiten Hohlraums auf einer Seite der Außenhautstruktur ist.

2. Detektionsvorrichtung nach Anspruch 1, wobei die erste Antennenplatine eine unabhängige Antennenplatine ist; oder
die erste Antennenplatine mindestens zwei unabhängige Antennenplatinen umfasst und ein eingeschlossener Winkel, der einen ersten Grad aufweist, zwischen zwei miteinander verbundenen Antennenplatinen in den mindestens zwei unabhängigen Antennenplatinen ausgebildet sein kann.

3. Detektionsvorrichtung nach Anspruch 2, wobei eine unabhängige Antennenplatine in der ersten Antennenplatine eine planare Antennenplatine oder eine nicht-planare Antennenplatine ist und eine nicht-planare Oberfläche eine regelmäßig gekrümmte Oberfläche, eine unregelmäßig gekrümmte Oberfläche oder eine gefaltete Oberfläche, die einen bestimmten Winkel aufweist, umfasst.

4. Detektionsvorrichtung nach einem der Ansprüche 1 bis 3, wobei eine innere Oberfläche des zweiten Hohlraums von einer planaren Ausgestaltung oder einer nicht planaren Ausgestaltung ist.

5. Detektionsvorrichtung nach einem der Ansprüche 1 bis 4, wobei die innere Oberfläche des zweiten Hohlraums durch ein wellenabsorbierendes Material bedeckt ist oder der zweite Hohlraum aus einem wellenabsorbierenden Material hergestellt ist.

6. Detektionsvorrichtung nach einem der Ansprüche 1 bis 5, wobei der erste Hohlraum eine erste Antennenplatine, eine erste digitale Vorrichtung und eine erste Abschirmvorrichtung umfasst; und
mindestens eine Vorrichtung aus der ersten Antennenplatine, der ersten digitalen Vorrichtung oder der ersten Abschirmvorrichtung an der Außenhautstruktur befestigt ist und eine andere Vorrichtung als die mindestens eine Vorrichtung aus der ersten Antennenplatine, der ersten digitalen Vorrichtung und der ersten Abschirmvorrichtung, die an der Außenhautstruktur befestigt ist, an dem Gehäuse befestigt ist; oder
die erste Antennenplatine, die erste digitale Vorrichtung und die erste Abschirmvorrichtung an dem Gehäuse befestigt sind; oder
die erste Antennenplatine, die erste digitale Vorrichtung und die erste Abschirmvorrichtung an der Außenhautstruktur befestigt sind.

7. Detektionsvorrichtung nach einem der Ansprüche 1 bis 6, wobei die Außenhautstruktur eine planare Struktur oder eine nicht planare Struktur ist.

8. Verfahren zum Herstellen einer Detektionsvorrichtung, umfassend:
Bereitstellen mindestens eines Gehäuses und einstückiges Auslegen einer Außenhautstruktur mit dem mindestens einen Gehäuse, wobei die Außenhautstruktur und jedes des mindestens einen Gehäuses einen ersten Hohlraum ausbildet, der jedem Gehäuse entspricht, und
der erste Hohlraum mindestens eines von einer ersten Antennenplatine, einer ersten digitalen Vorrichtung oder einer ersten Abschirmvorrichtung umfasst,
wobei das Herstellungsverfahren ferner Folgendes umfasst:
Ausbilden eines zweiten Hohlraums zwischen der ersten Antennenplatine und der Außenhautstruktur, und
wobei eine Öffnung des zweiten Hohlraums auf einer Seite der ersten Antennenplatine kleiner als eine Öffnung des zweiten Hohlraums auf einer Seite der Außenhautstruktur ist.

9. Herstellungsverfahren nach Anspruch 8, wobei die erste Antennenplatine eine unabhängige Antennenplatine ist oder die erste Antennenplatine mindestens zwei unabhängige Antennenplatinen umfasst und ein eingeschlossener Winkel eines ersten Grades zwischen zwei miteinander verbundenen Antennenplatinen in den mindestens zwei unabhängigen Antennenplatinen ausgebildet sein kann.

10. Herstellungsverfahren nach Anspruch 9, wobei eine unabhängige Antennenplatine in der ersten Antennenplatine eine planare Antennenplatine oder eine nicht-planare Antennenplatine ist und eine nicht-planare Oberfläche eine regelmäßig gekrümmte Oberfläche, eine unregelmäßig gekrümmte Oberfläche oder eine gefaltete Oberfläche, die einen bestimmten Winkel aufweist, umfasst.

11. Herstellungsverfahren nach einem der Ansprüche 8 bis 10, wobei eine innere Oberfläche des zweiten Hohlraums von einer planaren Ausgestaltung oder einer nicht planaren Ausgestaltung ist.

12. Herstellungsverfahren nach einem der Ansprüche 8 bis 11, wobei die innere Oberfläche des zweiten Hohlraums durch ein wellenabsorbierendes Material bedeckt ist oder der zweite Hohlraum aus einem wellenabsorbierenden Material hergestellt ist.

13. Herstellungsverfahren nach einem der Ansprüche 8 bis 12, wobei der erste Hohlraum eine erste Antennenplatine, eine erste digitale Vorrichtung und eine erste Abschirmvorrichtung umfasst; und
mindestens eine Vorrichtung aus der ersten Antennenplatine, der ersten digitalen Vorrichtung oder der ersten Abschirmvorrichtung an der Außenhautstruktur befestigt ist und eine andere Vorrichtung als die mindestens eine Vorrichtung aus der ersten Antennenplatine, der ersten digitalen Vorrichtung und der ersten Abschirmvorrichtung, die an der Außenhautstruktur befestigt ist, an dem Gehäuse befestigt ist; oder
die erste Antennenplatine, die erste digitale Vorrichtung und die erste Abschirmvorrichtung an dem Gehäuse befestigt sind; oder
die erste Antennenplatine, die erste digitale Vorrichtung und die erste Abschirmvorrichtung an der Außenhautstruktur befestigt sind.

14. Endgerät, wobei das Endgerät die Detektionsvorrichtung nach einem der Ansprüche 1 bis 7 umfasst.

15. Endgerät nach Anspruch 14, wobei das Endgerät ein Fahrzeug ist.

## Revendications

1. Appareil de détection, comprenant :
une structure de revêtement ; et
au moins un boîtier conçu de manière intégrale avec la structure de revêtement, dans lequel la structure de revêtement et chaque boîtier de l'au moins un boîtier forme une première cavité correspondant à chaque boîtier, et
la première cavité comprend au moins l'un des éléments suivants : une première carte d'antenne, un premier appareil numérique ou un premier appareil de blindage ;
dans lequel une seconde cavité est formée entre la première carte d'antenne et la structure de revêtement, et
dans lequel une ouverture, de la seconde cavité, sur un côté de la première carte d'antenne est plus petite qu'une ouverture, de la seconde cavité, sur un côté de la structure de revêtement.

2. Appareil de détection selon la revendication 1, dans lequel la première carte d'antenne est une carte d'antenne indépendante ; ou
la première carte d'antenne comprend au moins deux cartes d'antenne indépendantes, et un angle inclus ayant un premier degré peut être formé entre deux cartes d'antenne interconnectées dans les au moins deux cartes d'antenne indépendantes.

3. Appareil de détection selon la revendication 2, dans lequel une carte d'antenne indépendante de la première carte d'antenne est une carte d'antenne plane ou une carte d'antenne non plane, et une surface non plane comprend une surface courbée régulière, une surface courbée irrégulière, ou une surface pliée ayant un angle spécifique.

4. Appareil de détection selon l'une quelconque des revendications 1 à 3, dans lequel une surface intérieure de la seconde cavité est de conception plane ou de conception non plane.

5. Appareil de détection selon l'une quelconque des revendications 1 à 4, dans lequel la surface intérieure de la seconde cavité est recouverte d'un matériau absorbant les ondes, ou la seconde cavité est faite d'un matériau absorbant les ondes.

6. Appareil de détection selon l'une quelconque des revendications 1 à 5, dans lequel la première cavité comprend une première carte d'antenne, un premier appareil numérique et un premier appareil de blindage ; et
au moins un appareil parmi la première carte d'antenne, le premier appareil numérique ou le premier appareil de blindage est fixé sur la structure de revêtement, et un appareil autre que l'au moins un appareil parmi la première carte d'antenne, le premier appareil numérique et le premier appareil de blindage qui est fixé sur la structure de revêtement est fixé sur le boîtier ; ou
la première carte d'antenne, le premier appareil numérique et le premier appareil de blindage sont fixés sur le boîtier ; ou la première carte d'antenne, le premier appareil numérique et le premier dispositif de blindage sont fixés sur la structure de revêtement.

7. Appareil de détection selon l'une quelconque des revendications 1 à 6, dans lequel la structure de revêtement est une structure plane ou une structure non plane.

8. Procédé de préparation d'un appareil de détection, comprenant :
la fourniture d'au moins un boîtier, et la conception intégrale d'une structure de revêtement avec l'au moins un boîtier, dans lequel la structure de revêtement et chacun des au moins un boîtier forme une première cavité correspondant à chaque boîtier, et
la première cavité comprend au moins l'un des éléments suivants : une première carte d'antenne, un premier appareil numérique ou un premier appareil de blindage,
dans lequel le procédé de fabrication comprend en outre : la formation d'une seconde cavité entre la première carte d'antenne et la structure de revêtement, et
dans lequel une ouverture, de la seconde cavité, sur un côté de la première carte d'antenne, est plus petite qu'une ouverture, de la seconde cavité, sur un côté de la structure de revêtement.

9. Procédé de fabrication selon la revendication 8, dans lequel la première carte d'antenne est une carte d'antenne indépendante ou la première carte d'antenne comprend au moins deux cartes d'antenne indépendantes, et un angle inclus d'un premier degré peut être formé entre deux cartes d'antenne interconnectées parmi les au moins deux cartes d'antenne indépendantes.

10. Procédé de fabrication selon la revendication 9, dans lequel une carte d'antenne indépendante parmi la première carte d'antenne est une carte d'antenne plane ou une carte d'antenne non plane, et une surface non plane comprend une surface courbée régulière, une surface courbée irrégulière, ou une surface pliée ayant un angle spécifique.

11. Procédé de fabrication selon l'une quelconque des revendications 8 à 10, dans lequel une surface intérieure de la seconde cavité est de conception plane ou de conception non plane.

12. Procédé de fabrication selon l'une quelconque des revendications 8 à 11, dans lequel la surface intérieure de la seconde cavité est recouverte d'un matériau absorbant les ondes, ou la seconde cavité est faite d'un matériau absorbant les ondes.

13. Procédé de préparation selon l'une quelconque des revendications 8 à 12, dans lequel la première cavité comprend une première carte d'antenne, un premier appareil numérique et un premier appareil de blindage ; et
au moins un appareil parmi la première carte d'antenne, le premier appareil numérique ou le premier appareil de blindage est fixé sur la structure de revêtement, et un appareil autre que l'au moins un appareil parmi la première carte d'antenne, le premier appareil numérique et le premier appareil de blindage qui est fixé sur la structure de revêtement est fixé sur le boîtier ; ou
la première carte d'antenne, le premier appareil numérique et le premier appareil de blindage sont fixés sur le boîtier ; ou la première carte d'antenne, le premier appareil numérique et le premier appareil de blindage sont fixés sur la structure de revêtement.

14. Terminal, dans lequel le terminal comprend l'appareil de détection selon l'une quelconque des revendications 1 à 7.

15. Terminal selon la revendication 14, dans lequel le terminal est un véhicule.
